# EUROPEAN PATENT SPECIFICATION

(11) **EP 4 216 110 B1**
(45) Date of publication and mention of the grant of the patent: **14.10.2026**
(21) Application number: 22386002.4
(22) Date of filing: 21.01.2022
(51) Int. Cl.: G06N 5/025, G06N 3/0464

(54) **A QUANTIZATION METHOD TO IMPROVE THE FIDELITY OF RULE EXTRACTION ALGORITHMS FOR USE WITH ARTIFICIAL NEURAL NETWORKS**
QUANTISIERUNGSVERFAHREN ZUR VERBESSERUNG DER GENAUIGKEIT VON REGELEXTRAKTIONSALGORITHMEN ZUR VERWENDUNG MIT KÜNSTLICHEN NEURONALEN NETZEN
PROCÉDÉ DE QUANTIFICATION POUR AMÉLIORER LA FIDÉLITÉ DES ALGORITHMES D'EXTRACTION DE RÈGLES À UTILISER AVEC DES RÉSEAUX DE NEURONES ARTIFICIELS

(43) Date of publication of application: 26.07.2023
(73) Proprietor: Fujitsu Limited, Kawasaki-shi, Kanagawa 211-8588 (JP)
(72) Inventor: Kasioumis, Theodoros, Hayes, UB3 3BY (GB); Townsend, Joseph, Hazlemere, High Wycombe HP15 7AX (GB)
(74) Representative: Haseltine Lake Kempner LLP

(56) References cited:
- WO-A1-2019/180310
- US-A1- 2018 158 552
- US-A1- 2020 302 318
- TOWNSEND JOE ET AL: "ERIC: Extracting Relations Inferred from Convolutions", 19 October 2020 (2020-10-19), XP055936373, Retrieved from the Internet <URL:https://arxiv.org/pdf/2010.09452.pdf> [retrieved on 20220628]
- ZILKE JAN RUBEN ET AL: "DeepRED - Rule Extraction from Deep Neural Networks", 21 September 2016, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 457 - 473, ISBN: 978-3-540-74549-5, XP047359232
- TICKLE A B ET AL: "THE TRUTH WILL COME TO LIGHT: DIRECTIONS AND CHALLENGES IN EXTRACTING THE KNOWLEDGE EMBEDDED WITHIN TRAINED ARTIFICIAL NEURAL NETWORKS", IEEE TRANSACTIONS ON NEURAL NETWORKS, IEEE SERVICE CENTER, PISCATAWAY, NJ, US, vol. 9, no. 6, 1 November 1998 (1998-11-01), pages 1057 - 1067, XP000788875, ISSN: 1045-9227, DOI: 10.1109/72.728352

## Description

Embodiments of the present invention relate to a quantization method to improve the fidelity of rule extraction algorithms for use with artificial neural networks.

There is a growing need for interpretable artificial intelligence (AI) models, both in industry and academia. Many critical areas where machine learning is applied, for example healthcare, autonomous driving and finance, require the model to explain its decisions in a human interpretable way in order to be trusted. For example, explaining the decision-making process of a neural network may assist doctors in trusting the output classification of a neural network, allowing them to make a better judgement of patient condition and mitigating human errors. Moreover, the way a network training dataset is collected may introduce some hidden bias or spurious correlations between different classes, which a model being trained could learn and cut corners to make more accurate predictions but for the wrong reason. Explaining black-box models may help domain experts to identify errors in, or underlying biases of, those models. After diagnosing these errors/biases the models may be re-trained to produce a trusted model.

Methods for extracting rules to explain the decision-making process of a neural network essentially take as input the quantized filter/neuron activations from a subset of layers and measure the association with the target output. Many post-hoc rule extraction algorithms for CNNs rely on aggregating filter activations into a single value, since a filter is composed of many neurons. Thresholding is then carried out to determine whether a filter may be considered active (a process known as "quantization" - see J. Townsend, T. Chaton, J. M. Monteiro, "Extracting relational explanations from deep neural networks: A survey from a neural-symbolic perspective", IEEE Transactions on Neural Networks and Learning Systems 31 (2020) 3456-3470), detecting a specific pattern across images. For feed forward neural networks (FFNNs), rule extraction methods directly threshold neuron activations, so there is no need to aggregate.

As discussed in H. Jacobsson, "Rule extraction from recurrent neural networks: Ataxonomy and review", Neural Computation 17 (2005) 1223-1263, and elsewhere, a number of different techniques are known in the art to determine whether a filter/neuron is considered active. For example, in CNNs that use as non-linearity a sigmoid activation function ( $s \left(x\right) = \frac{1}{1 + {e}^{- tx}}$), a neuron is commonly considered active if *s*(*x*) *>* 0.5. Other techniques involve using discriminant hyperplanes and a stairway activation function (quantization of the sigmoid function) for thresholding neurons, using the per sample mean for each filter, dynamically thresholding above a neuron-specific percentile, k-means clustering, hierarchical clustering after neural learning for quantization in recurrent neural networks (RNNs), or using a Kohonen self-organizing map with star topology of neurons to quantize recurrent network states.

By associating filters/neurons with literals, rules are formed to explain the classification output of the CNN, where each atom used in the explanations corresponds to an active filter. Rule extraction may be applied to general ANNs by replacing filters with neurons. However, if the fidelity, i.e. the accuracy of the extracted program with respect to the original model (e.g. a measure of how often the output of the logic program is the same as the model predicted) is not very high, such post-hoc rule extraction models will essentially remain a black box. In this respect, existing approaches relying on sample statistics are not always appropriate because each filter activation may follow a different distribution, and thresholding with respect to sample statistics may overestimate or underestimate when a filter/neuron is considered active. In order for the output rules to approximate the original model more faithfully, the quantization step, that converts a float representation (or a matrix of float values in the case of convolutional neural networks (CNNs)) into a binary value, should result in minimal information loss. The article by Townsend Joe ET AL: "ERIC: Extracting Relations Inferred from Convolutions", 19 October 2020, URL:https://arxiv.org/pdf/2010.09452.pdf, pertains to a CNN trained to classify objects in input images from an environment of an autonomous driving vehicle, the CNN being for use in the control of the autonomous driving vehicle.

Therefore, it is desirable to develop an improved quantization approach in order to reach higher fidelity during rule extraction.

The present invention is defined in the independent claims, to which reference should now be made. Optional features are defined in the dependent claims.

Embodiments provide a quantization method that aims to find threshold values for each filter in a CNN (or, more generally, for each neuron in an artificial neural network, ANN) that more accurately capture when a filter (or neuron) is truly active in detecting a specific pattern in an input image. Embodiments find threshold values that result in minimum information loss during the quantization process and assist subsequent rule extraction algorithms to approximate more faithfully complex black-box models.

According to an embodiment this is accomplished by training various decision trees that approximate the CNN/ANN behavior and are built by taking as input filter/neuron activations (*not* quantized) and as output the CNN/ANN prediction. The threshold values used in splitting the nodes of each tree are stored in a list ***Tⱼ*** for each filter ***fⱼ*** separately. Afterwards rule extraction is performed for combinations of threshold values (for example, each possible combination of threshold values), and the threshold values of the combination that results in highest fidelity, i.e. the threshold values that result in a logic program that more faithfully approximates the behavior of the original model, are chosen.

Performing a search in the space of threshold values found by the decision trees (e.g. a random forest) that approximate the ANN and choosing the ones that result in higher fidelity may result in an extracted program that approximates the model more faithfully. Embodiments may find more appropriate threshold values for each filter, that more accurately capture when a filter is active, because the threshold values used in splitting the nodes of the decision trees are incentivized to reduce the information loss in order to optimize fidelity.

As optimal threshold values are found by optimizing a user-defined criterion and building decision trees where each tree approximates the neural network instead of relying on sample statistics, embodiments are highly versatile and do not rely on any knowledge about the distribution of filter activations.

Embodiments may boost the fidelity of post-hoc rule extraction algorithms that try to explain the decision of black box models by providing extracted rules which explain more faithfully the decisions of the models in an interpretable language that humans understand. Moreover, extraction programs with high fidelity may be used to detect hidden biases or errors in the original model, which may then be re-trained to get rid of those issues and obtain a more robust model.

Many consumers may be more attracted by black box models that are highly accurate and are accompanied by a rule extraction algorithm that explains faithfully the decisions of the model to the consumers. Accurately interpreting the decisions of black-box models is crucial for applying deep learning in critical areas, such as fully autonomous driving.

Finally, the proposed method may contribute to XAI research and assist in neuro-symbolic integration by reducing the gap between neural and symbolic representations. This happens because after applying the proposed method symbols may more accurately capture the state of the model due to reduced approximation loss during quantization.

Rule extraction algorithms take as input the activations of filters from a subset of layers and measure the association with the target output. Embodiments may be applied to any rule extraction algorithm that relies on neuron/filter activations to distil the knowledge from a neural network and explain its decisions. For example, embodiments may be combined with the post-hoc rule extraction program proposed by J. Townsend, T. Kasioumis, H. Inakoshi, in "ERIC: extracting relations inferred from convolutions", 15th Asian Conference on Computer Vision, Kyoto, Japan, Revised Selected Papers, Part III, volume 12624 of Lecture Notes in Computer Science, Springer, Nov. 30 - Dec. 4, 2020, pp. 206-222) to achieve better and more interpretable rules. However, any other existing or future method which maps filters/neurons to literals and generates rules over those literals may also be used.

Reference will now be made, by way of example, to the accompanying drawings, in which:
Figure 1 is a graph of filter activation magnitude against count for an example image dataset using the mean activation as a threshold;
Figure 2 is a graph of filter activation magnitude against count for an example image dataset using the mode of the distribution as a threshold;
Figure 3 is a flowchart showing an overview of a quantization method applied to filter activations of a CNN;

Embodiments may boost the fidelity of post-hoc rule extraction algorithms that try to explain the decision of black box models by providing extracted rules which explain more faithfully the decisions of the models in an interpretable language that humans understand. Moreover, extraction programs with high fidelity may be used to detect hidden biases or errors in the original model, which may then be re-trained to get rid of those issues and obtain a more robust model.

Many consumers may be more attracted by black box models that are highly accurate and are accompanied by a rule extraction algorithm that explains faithfully the decisions of the model to the consumers. Accurately interpreting the decisions of black-box models is crucial for applying deep learning in critical areas, such as fully autonomous driving.

Finally, the proposed method may contribute to XAI research and assist in neuro-symbolic integration by reducing the gap between neural and symbolic representations. This happens because after applying the proposed method symbols may more accurately capture the state of the model due to reduced approximation loss during quantization.

Rule extraction algorithms take as input the activations of filters from a subset of layers and measure the association with the target output. Embodiments may be applied to any rule extraction algorithm that relies on neuron/filter activations to distil the knowledge from a neural network and explain its decisions. For example, embodiments may be combined with the post-hoc rule extraction program proposed by J. Townsend, T. Kasioumis, H. Inakoshi, in "ERIC: extracting relations inferred from convolutions", 15th Asian Conference on Computer Vision, Kyoto, Japan, Revised Selected Papers, Part III, volume 12624 of Lecture Notes in Computer Science, Springer, Nov. 30 - Dec. 4, 2020, pp. 206-222) to achieve better and more interpretable rules. However, any other existing or future method which maps filters/neurons to literals and generates rules over those literals may also be used.

Reference will now be made, by way of example, to the accompanying drawings, in which:

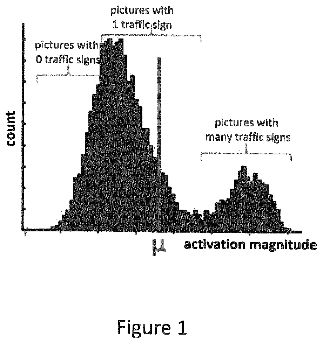

Figure 1 is a graph of filter activation magnitude against count for an example image dataset using the mean activation as a threshold;

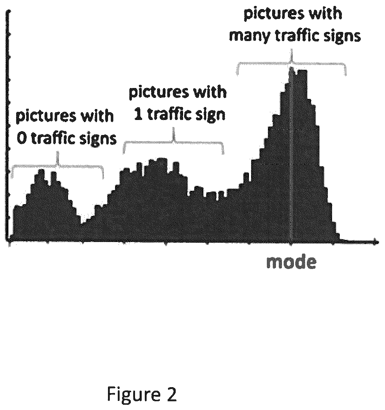

Figure 2 is a graph of filter activation magnitude against count for an example image dataset using the mode of the distribution as a threshold;

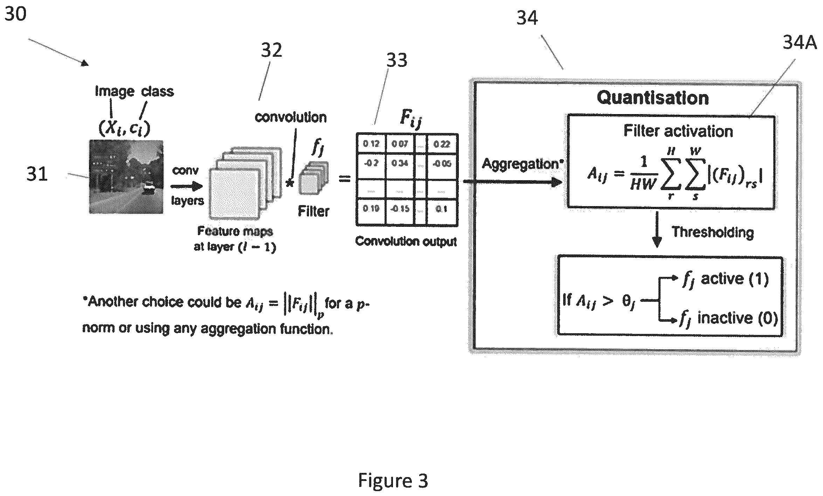

Figure 3 is a flowchart showing an overview of a quantization method applied to filter activations of a CNN;

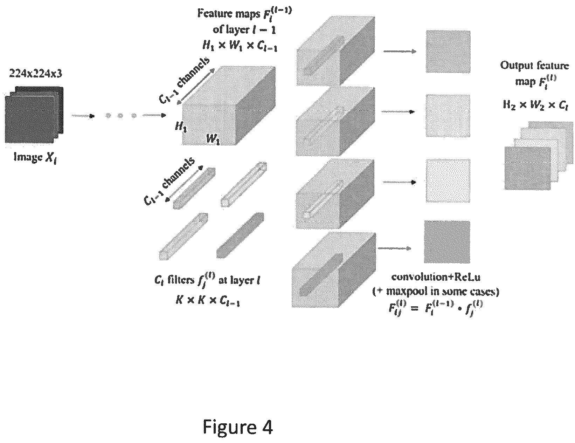

Figure 4 illustrates an example of a process to output feature maps from filters in a layer of a CNN;

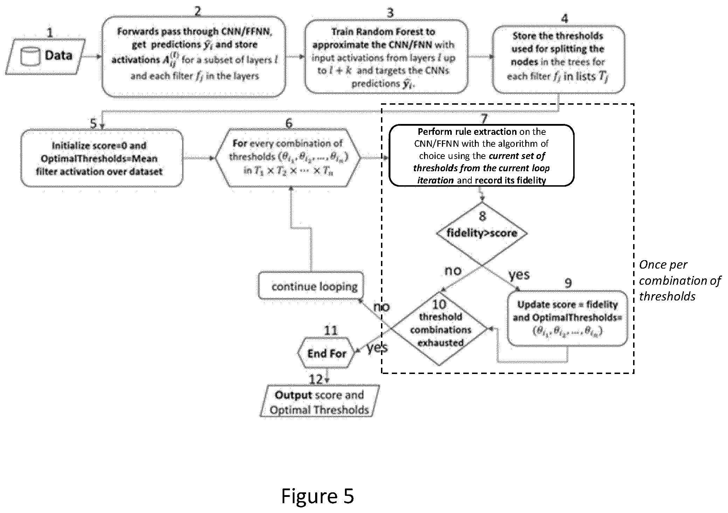

Figure 5 is a flowchart of a method in accordance with an embodiment;

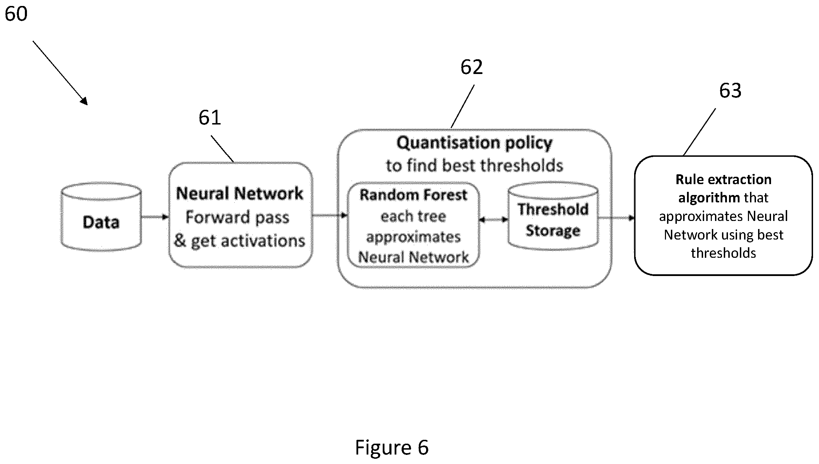

Figure 6 shows modules of a system in accordance with an embodiment;

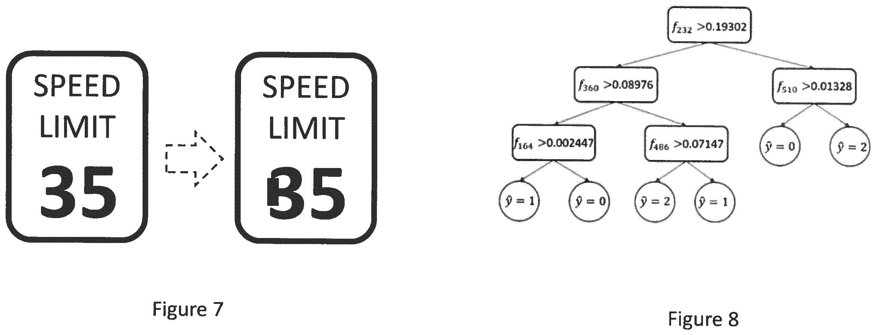

Figure 7 shows an example of how a road sign may be modified to trick a CNN;
Figure 8 shows a decision tree used to explain an embodiment; and

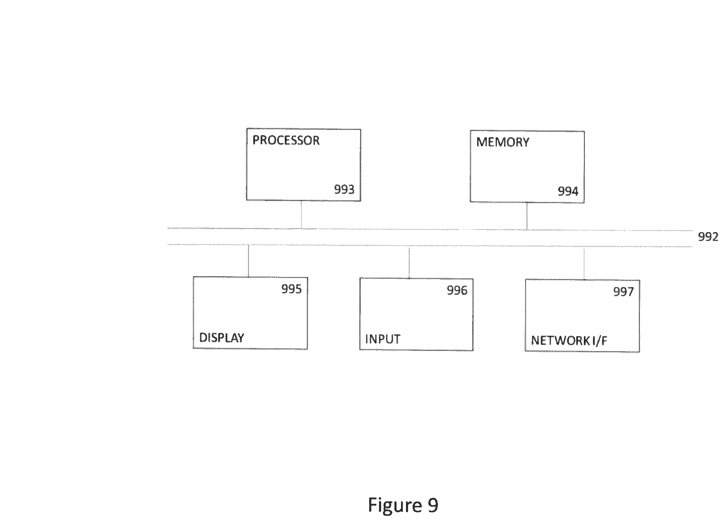

Figure 9 is a block diagram of a computing device suitable for carrying out a method according to an embodiment.

Without loss of generality the proposed method is described below for convolutional neural networks, but it should be noted that everything described in this section may be generalized trivially to ANNs by replacing filters with neurons or nodes in the terminology.

The fidelity of rule extraction programs that rely on quantization of filter activations to explain the output classification of a trained CNN heavily depends on the quantization procedure. Quantization may be regarded as a 2-step process: a) applying an aggregation function (like mean, sum, max, etc.) and b) thresholding. The goal of quantization is to convert the output feature map produced by convolutional kernel multiplication into a binary value in order to determine whether a kernel is considered active, i.e. detecting a pattern in the input image. The aggregation function is needed in order to convert the multidimensional feature map into a single value that depicts the strength of kernel activation, whereas the thresholding is necessary to determine above which value θ is a kernel considered active. In order for the output rules to approximate the original CNN faithfully (i.e. have high fidelity) the quantization step, that converts a float representation (or a matrix of float values in the case of CNNs) into a binary value, should result in minimal information loss. If the quantization step introduces high approximation error ε, then rule extraction is unable to reach its highest potential and the fidelity of the extracted program will be upper bounded by 1-ε. Hence, developing more principled quantization approaches is key to reaching higher fidelity during rule extraction.

As mentioned above, many approaches in the literature use sample statistics to determine whether a filter is considered active, detecting a specific pattern in the input image. For example, for CNNs different images from a dataset are passed through the network and filter activations are recorded; if ${\left\{{X}_{i}\right\}}_{i = 1}^{N}$ are images in a dataset then for each filter ${f}_{j}^{\left(l\right)}$ at layer (*l*) the activations ${A}_{ij}^{\left(l\right)}$ are stored in a list ${a}_{j}^{\left(l\right)} = \left\{{A}_{1 j}^{\left(l\right)},…,{A}_{Nj}^{\left(l\right)}\right\}$. In approaches relying on sample statistics a filter ${f}_{j}^{\left(l\right)}$ is considered active on an image *Xₛ* if its activation ${A}_{sj}^{\left(l\right)}$ is either above
- the sample mean ${μ}_{j} = {\sum }_{i = 1}^{N} {A}_{ij}^{\left(l\right)}$ or
- the mode or
- the standard deviation ${σ}_{j} = {\left[\frac{1}{N - 1}{\sum }_{i = 1}^{N} {\left({A}_{ij}-{μ}_{j}\right)}^{2}\right]}^{- 1 / 2}$ or
- a combination *µⱼ* + *λ*σⱼ for user defined *λ* or
- a percentile

However, such threshold values in practice fail to determine whether a filter is truly active. One reason for this inefficiency is that such threshold values only make sense if the distribution of each filter's activations is Gaussian-like, an assumption that might be strongly violated in practice if the distribution has heavy tails, or is highly skewed, or is multimodal for example.

Another issue with using the mean as a threshold is that it is highly affected by extremal values. For example, consider a dataset of images where a subset of them has many traffic signs (maybe these were captured from a very busy spot in a town or from a training driving course), the majority of the images contain 1 traffic sign and the rest have 0 zero traffic signs (e.g. captured in a forest). On images with multiple traffic signs present, we expect the magnitude of the feature map of filters detecting traffic signs to be very high (because many traffic signs are detected in multiple locations). As shown in Figure 1, these extremal values will 'push' the mean *µ* to a higher value, and may even result in a bimodal distribution if there are many such extremal values. In pictures containing only 1 traffic sign, the activation magnitude of the filter that detects a traffic sign may not be high enough to surpass the mean. In that case, if the threshold is the mean, the threshold will fail to determine correctly whether a filter is active.

Replacing the mean with the mode of the distribution (since the mode is not affected by extremal values) solves the previous issue, but it will introduce another problem. Consider a dataset where the majority of the images were captured in a town and contain multiple traffic signs. On those images the activation magnitude of filters that detect traffic signs will be very high because there will be many peaks in the feature map. Suppose there exist some images with only 1 traffic sign in them which is far away (hence appearing small in the image). This means that the activation magnitude is small but higher than zero. Also suppose there exist a few images with no traffic sign in them. This dataset could result in an activation distribution of filters detecting traffic signs as shown in Figure 2. If the mode of the distribution is selected as the threshold to determine whether a filter is active or not, then for images that contain only 1 traffic sign, the filter will be wrongly considered in-active. This will introduce errors in subsequent rule extraction algorithms that rely on the quantization of literals deteriorating their fidelity. Similar examples may be constructed to depict that other threshold values relying on sample statistics may fail in practice.

Another reason that threshold values relying on sample statistics may fail in practice has to do with the size of the pattern that is being detected by a filter. Objects that are far away from the camera look smaller in the image and hence will occupy a smaller region in the feature map in the layer of interest after many convolutions and maxpooling operations. For example, suppose that a filter fires in response to traffic signs and an image contains a traffic sign that is far away from the camera. Then, after convolution and maxpooling operations, the corresponding traffic sign activation region will get much smaller. As a consequence, the magnitude of activation will also be small, due to many aggregations with regions of zero-activation around the traffic sign. This means that the activation magnitude of the filter may be lower than the mean activation threshold over different images, and the filter will be falsely deemed in-active even though the image contains a traffic sign.

It is evident from the aforementioned examples that threshold values depending on the mean or mode do not generalize well to arbitrary distributions of filter activations. These types of threshold values will introduce high approximation errors during the quantization process, and this will have an impact on the rule extraction fidelity.

The present proposal introduces a quantization method that aims to find threshold values which more accurately capture when a filter is truly active and that maximize the fidelity of subsequent rule extraction programs. This is accomplished by training a random forest where each tree approximates the neural network behavior and is built greedily (i.e. according to a greedy algorithm) to optimize a user-defined criterion. Each tree takes as input the filter activations (not quantized) from a subset of layers of the CNN and as target the CNN predictions. The threshold values used in splitting the nodes of the trees in the random forest are stored in a list *T_{f}* for each filter *f* separately. Afterwards, rule extraction for each possible combination of threshold values is performed (an exhaustive grid search may be performed to find the threshold values that result in highest fidelity, but other approaches are possible, for example random search or Bayesian approaches (i.e. guided search), and the ones that result in higher fidelity are chosen, i.e. the threshold values that result in a logic program that approximates the behavior of the original CNN more faithfully. By choosing a better policy for quantizing the kernels, information loss may be reduced and the fidelity of rule extraction algorithms that explain the decisions of neural networks may be increased.

Embodiments are distinguished over the prior art by one or more of the following:
1. one or more decision trees, e.g. a random forest, is utilized to find plausible threshold values for rule extraction that optimize a user-defined criterion;
2. the threshold values used in splitting the nodes of each tree are chosen to maximize the user-defined criterion (e.g. entropy, Gini index, etc.) in order to minimize the information loss during thresholding, and are stored for each filter.
3. the optimal threshold values are chosen to maximize the fidelity of subsequent rule extraction algorithms by searching on the space of threshold values defined by the random forest.
4. each tree in the forest approximates the original CNN and is trained with, as inputs, the filter activations from a subset of layers that will be used in rule extraction and, as targets, the CNN's predictions.
5. the list of threshold values is searched and respective global threshold values are selected for each filter separately, so that the subsequent rule extraction algorithm that uses such threshold values has maximal fidelity.

Figure 3 shows a flowchart 30 showing an overview of a quantization method 34 applied to filter activations 33 of a CNN 32. A filter is considered active if its activation for input images 31 surpasses a certain threshold (image 31 shown is taken from places365 dataset: B. Zhou, A. Lapedriza, A. Khosla, A. Oliva, A. Torralba, "Places: A 10 million image database for scene recognition", IEEE Transactions on Pattern Analysis and Machine Intelligence 40 (2018) 1452-1464.). In order to apply the proposed thresholding policy in CNNs, an aggregation step 34A should first be performed to convert filter activations to a single value, as shown in Figure 3. The aggregation step 34A is not needed for FFNNs, since in that case the method is applied directly on neuron activations to determine optimal threshold values. After the aggregation step 34A, the quantization method is applied to find optimal threshold values for each filter that determine above which value a filter is considered active.

Before explaining a method according to an embodiment, some necessary preliminaries will be introduced and the notation will be fixed.

Assume that activations of *J* filters $\left\{{f}_{1}^{\left(l\right)},…,{f}_{j}^{\left(l\right)}\right\}$ in layer *l* of a CNN are to be quantized and optimal threshold values {*θ*₁, ... , *θ_{J}*} to improve the fidelity of subsequent rule extraction algorithms that approximate the behavior of the CNN are to be found. Without loss of generality, the method is described for one layer, but similar quantization may be done on multiple layers of the CNN.

Let *C* denote the total number of classes for the classification problem at hand and let *cᵢ* denote the ground truth label/class for an image *Xᵢ* in the dataset. Given a training dataset {*X*₁, ... , *X_{N}*} of images, let ${F}_{i}^{\left(l\right)} = \left({F}_{i 1}^{\left(l\right)},{F}_{i 2}^{\left(l\right)},…,{F}_{iJ}^{\left(l\right)}\right)$ stand for the feature map (also known as activations) output of the *l*-th layer for the *i*-th image. Each ${F}_{ij}^{\left(l\right)}$ for *j =* 1, ..., *M*, is a 2D matrix of activations that is defined as the convolution of the feature map of layer *l* - 1 with the *j*-th filter for *i*-th image in the batch, i.e., ${F}_{ij}^{\left(l\right)} = {F}_{i}^{\left(l-1\right)} ∗ {f}_{j}^{\left(l\right)}$ where * stands for the convolution operator followed by ReLu (and in some cases by maxpooling also, depending on the architecture) and ${F}_{i}^{\left(0\right)} = {X}_{i}$ is the input image. This is illustrated in Figure 4.

**Definition:** A filter ${f}_{j}^{\left(l\right)}$ is said to be 'active' for an image *Xᵢ* if its activation ${A}_{ij}^{\left(l\right)}$ surpasses a filter-specific threshold *θⱼ* (to be determined with the proposed method) i.e., if ${A}_{ij}^{\left(l\right)} > {θ}_{j}$.

As mentioned previously, many previously-proposed approaches use sample statistics to determine when a filter is active on a given image. The presently-proposed method differs in that a random forest is used to find filter-specific threshold values, where each tree approximates the original CNN. After finding a list of plausible threshold values *θⱼ* for each filter ${f}_{j}^{\left(l\right)}$, a search through that space of threshold values is performed to find the optimal ones which result in the highest fidelity for the subsequent rule extraction algorithm of choice.

In the rest of this section the steps of the proposed quantization method are discussed with reference to a CNN on image data, but the described method may be generalized to embodiments not falling under the scope of the claims to any ANN using non-pictorial data by replacing filter activations (spatial average of feature map) with neuron activations.

A flow diagram of the method is shown in Figure 5, and modules of a system for carrying out the proposed method are shown in Figure 6. As described later with reference to Figure 9, modules 61 to 63 of Figure 6 may be implemented in one or more processors 993 of one or more computing devices 10, which also comprise one or more memories 994 for storing data input to, used by and/or output from the processor(s) 993.

**Quantization process** (numbering corresponds to steps in Figure 5 and modules in Figure 6):
**1) Obtain training images.**
**2) Forward pass** images {*X*₁, ... , *X_{N}*} through the CNN (module 61), **get predictions** $\left\{\hat{{y}_{1}},…,\hat{{y}_{N}}\right\}$ of the CNN **and record filter activations** $\left\{{A}_{1 j}^{\left(l\right)},…,{A}_{Nj}^{\left(l\right)}\right\}$ for each filter ${f}_{j}^{\left(l\right)}$ in layer *l.* For example, **create a table with columns the filter activations and predictions of CNN** across all image data, i.e. the first column stores $\left\{{A}_{11}^{\left(l\right)},…,{A}_{N 1}^{\left(l\right)}\right\}$ , the second column stores $\left\{{A}_{12}^{\left(l\right)},…,{A}_{N 2}^{\left(l\right)}\right\}$ , etc. up to the *J*-th column $\left\{{A}_{1 J}^{\left(l\right)},…,{A}_{NJ}^{\left(l\right)}\right\}$ , and the (*J* + 1)-th column stores the predictions $\left\{\hat{{y}_{1}},…,\hat{{y}_{N}}\right\}$ of the CNN on each image of the training dataset.
**3) Build one or more decision trees,** for example using the random forest method (module 62) which generates multiple decision trees with some random variation each time. The variation in the process for generating trees does not necessarily need to be random (i.e. a deterministic process might be used), but random variation is likely to yield better results. In the present example a random forest, that takes as input the *j*-th columns of the above table that contain the activations and as targets the predictions of the CNN, is built. Each tree approximates the CNN's predictions (knowledge distillation - see Hinton G., Vinyals O., Dean J., "Distilling the Knowledge in a Neural Network", NIPS Deep Learning and Representation Learning Workshop, 2015, http://arxiv.org/abs/1503.02531) and optimizes a user-defined criterion. At each node of the decision tree the defined criterion is used to determine for which feature input activations should be split, the feature with the minimum (or, depending on the criterion, the maximum) value for the defined criterion being selected as the feature used for splitting the activations. This value, which corresponds to the value at which the node of the CNN is considered to be active for the feature, is the node's "threshold value". In this example, feature subsample (e.g. 75%) and bootstrap (e.g. 75%) are used to create diverse trees, i.e. to avoid the creation of trees that use the same filters and threshold values. Methods other than bootstrap or feature subsampling may be used to vary the trees.
**4) Store the threshold values** (module 62) **used in splitting the nodes of each tree in a list *Tⱼ* and the location/depth that they appear in each tree (i.e. the number of nodes traversed from the root node) in a list *Lⱼ* for each filter *fⱼ* separately.** This means that multiple values of the same threshold might occur in the list. For each threshold in the list *Tⱼ*, determine its frequency, i.e. count how many times it appears in that list (no distinction is made between threshold values that match up to a given precision, i.e. consider them as the same threshold values in the count). The higher the frequency, the more important the threshold. Finally, order the threshold values with respect to that frequency (if ordered in descending order, a higher frequency threshold will appear at a higher index in the list; if ordered in ascending order, a higher frequency threshold will appear at a lower index in the list). It should be noted that, although in practice it may be beneficial to store the threshold values in a ranked list, it is not essential to do so.
   If two threshold values have the same frequency, then order them according to the average depth of decision nodes that they appear when splitting the trees in random forest. For each filter *fⱼ* the average depth that it appears is just the mean of the values in *Lⱼ.*
   Therefore, after building the random forest, each filter will be associated with a list of threshold values: *fⱼ*←→*Tⱼ* = [*θ*_{*j*1}, *θ*_{*j*2}, ... , *θ_{jkⱼ}*], where *kⱼ* denotes the number of unique threshold values for each filter and the list is sorted in descending order with respect to their occurrence frequency when splitting the nodes and average depth of appearance.
   **Remark 1:** If a list *Tₖ* is empty, a situation which happens when filter *fₖ* does not appear in any tree of the random forest while splitting the nodes, then append to the list *Tₖ* the per sample mean *µₖ* activation of that filter, i.e. *Tₖ =* [*µₖ*]*.* In the corresponding *Lₖ* list append 1 depth, i.e., *Lₖ* = [1].
   **Remark 2:** In order to make the list of threshold values more manageable, additional quantization/binarization or clustering algorithms may be used to group similar values together in a bin, and then a representative for them (e.g. the mean threshold) may be chosen to replace them with that value (however, this binarization procedure may introduce approximation errors, and it is recommended only if the threshold list is quite large (e.g. more than 4-5 threshold values for each kernel)).
   The reasoning behind steps 3) and 4) is threefold:
      a. the most important filters for the rule extraction may be determined; these are the ones which contain more threshold values in the list, hence appearing more often while splitting nodes.
      b. a variety of different threshold values for each filter are obtained from which one may be chosen as a global threshold *θ_{f},* to determine when a filter is active and improve the fidelity of subsequent rule extraction.
      c. decision trees split the nodes in a greedy fashion - nodes closer to the root always have the biggest reduction in the chosen criterion - however this may not result in the optimal solution when it comes to threshold values. Hence, by considering more threshold values, more of the solution space may be explored, with the aim of finding a better exploration-exploitation tradeoff.
**5) (steps 5 to 11 of** **Figure 5****) For every combination of threshold values (*θ*_{*i*₁}, *θ*_{*i*₂}, ... , *θ_{iₙ}*) ∈ *T*₁ ×*T*₂** × **... × *Tₙ*, perform rule extraction using a preselected rule extraction algorithm and measure the fidelity of the rules** (module 63). **Steps 6 to 11 of** **Figure 5** **include a FOR LOOP in which steps 7 to 10 execute at most once for each combination (once per iteration).**

**Remark:** Instead of an exhaustive grid search through the different threshold values, different strategies may be used for increased speed:
a. **TopK Search:** pick the topK threshold values for each filter *fⱼ* from the ordered list *Tⱼ,* essentially searching only through the most important threshold values.
b. **Random Search:** Simply pick a subset of threshold values at random for each *Tⱼ* and perform rule extraction using this subset.
c. **Guided Search:** Use **prior beliefs or any type of user-defined criterion** to perform the search - it might be helpful to use knowledge (i.e. prior beliefs) about the problem domain to influence the user's choice of criterion (for example, if the user knew that a particular kernel responds to a particular concept known to be very important in the domain, they may set a policy that the highest frequency threshold for that kernel should always be selected) or a user-defined criterion selected to restrict the search to thresholds within a certain range, or for which the total sum of thresholds is minimum, might perhaps be used.

**6) (step 12 of** **Figure 5****) Return the extracted program with highest fidelity and the respective threshold values ("global threshold values") for each of the filters that yielded the best outcome** (module 63).

An algorithm for carrying out the method described above is set out below:

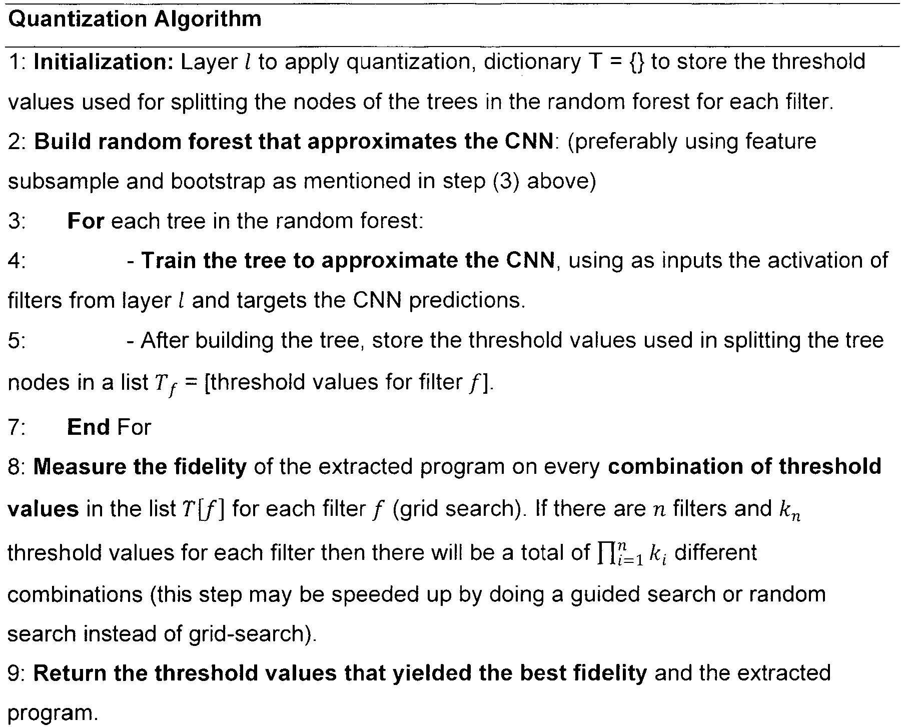

### Worked Example

Experiments were conducted using the above-described quantization policy on a toy subset of the Places365 dataset that contains 3 categories: 'forest road', 'highway', 'street'. Hereafter this 3-class dataset will be referred to as the 'road' dataset for convenience. The training-validation-test split that used was 10,445 - 1,500 - 3,055 with 500 images per class for validation and roughly 1018 images per class for testing. This dataset was chosen because scenes could be described through sub-objects and topics present within them, making it a good candidate for rule extraction.

Classifying scenes may be particularly useful in an autonomous driving scenario where a neural network is used to make decisions about steering, braking, accelerating etc. It is well known that neural networks are subject to adversarial attacks. An example from real life is someone tricking a vehicle autopilot into believing that a 35mph speed sign was a 85mph speed sign by using adhesive tape on the 35mph sign, as shown in Figure 7, which would be very dangerous. Having an additional network (or adding another classification head to an existing model) to classify the scene may be useful in this situation, because the model may be able to estimate from the scene if accelerating to 85mph is sensible or not.

Firstly, a network for multiclass classification was trained on the road dataset. VGG-16 of the network was initialized with weights pretrained on ImageNet, followed by preprocessing and augmentations as done by A. Krizhevsky, I. Sutskever and G. E. Hinton ("Imagenet classification with deep convolutional neural networks", Advances in Neural Information Processing Systems, volume 25, Curran Associates, Inc., 2012). The last dense layer was finetuned for 50 epochs using the Adam optimizer (described in D. P. Kingma, J. Ba, Adam: "A method for stochastic optimization", 3rd International Conference on Learning Representations, ICLR 2015, San Diego, CA, USA, May 7-9, 2015) with *β*₁ = 0.9, *β*₂ = 0.999, *ε* = 1e-08, ridge regularization parameter 0.005 and learning rate 5x10⁻⁵ using an NVIDIA GPU 1080 Ti 12GB and TensorFlow^{™} framework. Afterwards, training of all layers was resumed for 100 epochs with learning rate 10⁻⁶. The conv13 layer was selected because filters in deeper layers in CNNs tend to represent object parts and more semantic concepts than earlier layers.

After finetuning VGG-16 on the 'road' dataset, rule extraction was performed using the ERIC technique (J. Townsend, T. Kasioumis, H. Inakoshi, "ERIC: extracting relations inferred from convolutions", 15th Asian Conference on Computer Vision, Kyoto, Japan, Revised Selected Papers, Part III, volume 12624 of Lecture Notes in Computer Science, Springer, Nov. 30 - Dec. 4, 2020, pp. 206-222), using the per sample mean activation for each kernel as a baseline, and the fidelity of the extracted program was measured. The results are shown in the 2^{nd} column of Table 1.

**TABLE 1**

| ERIC tree depth | Baseline Fidelity (mean threshold values) | Quantization Policy Fidelity |
|---|---|---|
| Depth 3 | 75.96% | **78.76%** |
| Depth 4 | 81.88% | **84.65%** |

To measure its effectiveness, the proposed quantization policy was applied after finetuning VGG-16 of the 'road' dataset. Firstly, all images of the road dataset were passed through the CNN, and the filter activations in layer conv13 of VGG-16 were recorded. For each image *Xᵢ,* 1 ≤ *i* ≤ *N* in the 'road' dataset, a 512 array $\left({A}_{i 1}^{\left(l\right)},…,{A}_{i 512}^{\left(l\right)}\right)$ of filter activations was stored (for the training, validation and test datasets, i.e., N=10,445, N=1,500 and N=3,055 respectively). An example of such a 512-dimensional array of filter activations is (0.05635, 0.36253, 0.36554, ...., 0.00932, 0.019682, 0.043455).

After passing all images through the CNN, three tables (for the training, validation and test datasets respectively) were created, with each ith row consisting of, for each sample, a vector of the activations $\left({A}_{i 1}^{\left(l\right)},…,{A}_{i 512}^{\left(l\right)}\right)$ and the predictions ${\hat{y}}_{i}$ of the CNN on the i-th image.

Then, a random forest was trained on the training dataset (10,445 rows) using feature subsample and bootstrap for diversified trees. Figure 8 shows an example of a tree in the random forest. The lowermost level of the tree are the leaves, which are the predictions of the tree that approximate the predictions ${\hat{y}}_{i}$ of the CNN model. In this Figure, prediction 0 stands for 'forest road', prediction 1 for 'highway' and prediction 2 for 'street', and ***f*₂₃₂** > **0**.**19302** for example means "if the 232-th filter's activation surpasses the threshold 0.19302, then traverse to left, otherwise go on the right branch".

For each tree, the threshold values in splitting the nodes of each tree were stored in a list ***Tⱼ*** and the location/depth that they appear in each tree were stored in a list ***Lⱼ*** for each filter ***fⱼ*** separately.

After training the random forest, a list of threshold values for each filter was obtained: $\begin{matrix}{T}_{1} = \left[0.00245\right] , {T}_{2} = \left[0.003652\right] , … \\ {T}_{232} = \left[0.19302, 0.12763, 0.19302, 0.08976\right] , … \\ {T}_{360} = \left[0.19763, 0.19763, 0.08976, 0.04582\right] , … \\ {T}_{486} = \left[0.15872, 0.15872, 0.07147\right] , … \\ {T}_{510} = \left[0.020478, 0.013278\right] , {T}_{511} = \left[0.043455, 0.043455, 0.012758\right]\end{matrix}$ and ${L}_{1} = \left[1\right] , {L}_{2} = \left[1\right] , … {L}_{232} = \left[1, 2, 1, 2\right] , … , {L}_{360} = \left[1, 1, 2, 3\right] ,$ ${L}_{486} = \left[1, 1, 3\right] , … , {L}_{510} = \left[1, 2\right] , {L}_{511} = \left[1, 1, 3\right]$

If a list is empty (i.e. the filter does not appear as a splitting node in the random forest), then the per sample mean of filter activations is appended to the list.

Then, filters ***fⱼ*** were ranked with respect to the number of threshold values in their list ***Tⱼ,*** where filters with longer lists were more important: ${f}_{232} ≽ {f}_{360} ≽ {f}_{486} ≽ {f}_{511} …$

Afterwards, rule extraction was performed using the ERIC technique on every combination of threshold values **(*θ*_{*i*1}, *θ*_{*i*₂},** ... , *θᵢₙ*) ∈ ***T*₁** × ***T*₂** × ... × ***Tₙ***, and the fidelity of the program was measured. The combination of threshold values that yielded the best fidelity was chosen. In this example the best combination of threshold values used in splitting the nodes in the random forest was:
*f*₁₁₈: 0.146848, *f*₁₆₄:0.002447, *f*₂₃₂:0.19302, *f*₂₆₆:0.116928, *f*₂₇₆:0.07767 *f*₃₆₀:0.197632, *f*₄₈₆:0.15872, *f*₅₀₀:0.020478, *f*₅₁₁:0.043455

Results of rule extraction using the above best combination of threshold values are shown in the 3rd column of Table 1. A 3% improvement in the fidelity after using the threshold values obtained from the proposed quantization method was observed compared to the baseline per sample mean filter threshold values.

### Alternative Example

In a medical scenario not falling under the scope of the claims the input images might be medical images, for example one or more of X-rays, CT-scans, etc., with the CNN being trained to confirm the presence of one or more features in an input image. On the basis of this information, combined with the explanation as to why the CNN made that determination, a medical expert might be able to confirm the presence of an abnormality, make a diagnosis or determine a course of treatment. For example, if the input images are X-rays of lungs, the y labels in Figure 8 might instead represent:
0 = no determination
1 = presence of mass in the lung or diagnosis of lung cancer
2 = presence of fluid around the lung or diagnosis of pneumonia

### Application areas

Reaching high levels of fidelity while maintaining interpretability is very beneficial for using highly accurate black-box models in critical domains such as:

### Autonomous vehicles

In autonomous driving there is a great need for interpretable models because deep neural networks may be responsible for steering, braking, stopping, accelerating the vehicle and other actions, based on input images from the environment. Rule extraction algorithms may be used to explain the decisions of black-box models in a human interpretable way in order to build trust into these models. The proposed method finds more appropriate threshold values that boost rule extraction fidelity, meaning that the extracted program represents more faithfully the black-box model.

Moreover, if the model relied on spurious correlations and biases during training to reach high accuracy, then the extracted program may cause the user to ignore the model's prediction (assuming that the extracted program has high enough fidelity) or try to debug it. Afterwards, the model may be re-trained to mitigate these errors and biases.

Extracted rules may also be useful for audit purposes, where an insurance agent might be interested in knowing why a car behaved incorrectly, what caused a crash and who should take responsibility. Furthermore, extracted rules may be useful for taxis, haulage and other transport companies auditing their own cars/employees; if for example a customer or witness makes a complaint that is not bad enough for an insurance or legal claim, but still bad enough to harm a company's reputation.

Hence, logic programs with high fidelity are highly desirable, otherwise the logic programs may not represent faithfully the black-box model and explain its decisions in a human interpretable manner. The proposed quantization method helps in that direction by choosing more appropriate threshold values to create faithful logic programs.

### Healthcare

In healthcare, state-of-the-art deep neural networks may reach high accuracy, however their predictions may not be trusted by doctors, especially in life critical situations, if it is not clear what drives their decisions. Rule extraction algorithms may approximate these models in a human interpretable way and assist doctors in understanding the predictions of black box models. Since the fidelity of the extracted rules measures how well the output logic program approximates the black box model, reaching high fidelity is key to the understanding of those models. Similar to autonomous driving, these rules may be used to indicate bugs or errors of the model to the doctor, who may then either ignore their decisions or cause the model to be retrained to correct them.

### Other areas

Highly faithful rule extraction algorithms may be very beneficial in finance applications, for example to explain the decisions of black-box models that are utilized to make automated decisions for loans and/or predictions about a person being in default, or criminal justice applications, for example if a neural network is used to recommend sentencing to a judge who makes the final decision, and the judge wishes to understand how the sentence is derived from facts about the crime and the defendant.

Figure 9 is a block diagram of a computing device 10, such as a data storage server, which embodies the present invention, and which may be used to implement some or all of the operations of a method embodying the present invention, and perform some or all of the tasks of apparatus of an embodiment.

The computing device 10 comprises a processor 993 and memory 994. Optionally, the computing device also includes a network interface 997 for communication with other such computing devices, for example with other computing devices of invention embodiments. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a general purpose computer, special purpose computer, or special purpose processing device (e.g., one or more processors) to perform one or more functions or operations. For example, the computer-executable instructions may include those instructions for implementing the method of Figure 5, or any other method steps disclosed herein, and/or data such as training, validation and/or testing datasets, the structure of the ANN, feature activations, derived thresholds of the decision trees, and/or the selected rule extraction algorithm. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement some or all of the method steps described herein. For example, the code may implement only step 2 or step 3 or steps 5 to 12 of the method of Figure 5, or all of steps 1 to 12 of Figure 5. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein.

The display unit 995 may display a representation of data stored by the computing device, such as images input into the CNN, the rules extracted from the CNN, and/or any other input/output described above, and may also display a cursor and dialog boxes and screens enabling interaction between a user and the programs and data stored on the computing device. The input mechanisms 996 may enable a user to input data and instructions to the computing device, such as selecting a rule extraction algorithm to be used, a criterion to be optimized, and/or a dataset to be used for training.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 10 such as that illustrated in Figure 9. Such a computing device need not have every component illustrated in Figure 9, and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention can be implemented in digital electronic circuitry, or in computer hardware, firmware, software, or in combinations of them. The invention can be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program can be in the form of a stand-alone program, a computer program portion or more than one computer program and can be written in any form of programming language, including compiled or interpreted languages, and it can be deployed in any form, including as a stand-alone program or as a module, component, subroutine, or other unit suitable for use in a data processing environment. A computer program can be deployed to be executed on one module or on multiple modules at one site or distributed across multiple sites and interconnected by a communication network.

Method steps of the invention can be performed by one or more programmable processors executing a computer program to perform functions of the invention by operating on input data and generating output. Apparatus of the invention can be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

### Brief Description of Technical Terms Used - Glossary

- FFNN = Feed Forward Neural Network
- Fidelity = Faithfulness of the extracted logic program with respect to the original model. It is the accuracy of the logic program when the targets are the predictions of the original model instead of the ground truth labels.
- ${W}_{ij}^{\left(l\right)}$ denotes the weight connecting the i-th neuron of layer *l* - 1 and *j*-th neuron of layer *l*.
- *W*^{(*l*)} denotes the collection of all weights (as a matrix) at layer *l*.
- The convolution operator is denoted by *
- Kernel = *K*₁ × *K*₂ matrix that convolves the input image or feature map (depending on the layer)
- Filter = K₁ × *K*₂ × *C*_{*l*-1} matrix where *C*_{*l*-1} denote the input channels of layer. A filter is a set of weights that make a single channel in a convolutional layer, i.e., a filter in CNNs is essentially a collection of neurons.
- Feature Map = synonym for activation map and it is the outcome of the convolution operator (*H*_{*l*-1} × *W*_{*l*-1} × *C*_{*l*-1}) * *Fᵢ* for *i* = 1,2, ..., *Cₗ , Fᵢ* denotes a filter of size K₁ × *K*₂ × *C*_{*l*-1} and *Cₗ* denotes the total number of filters for layer *l.* The dimension of the output feature map is denoted as H*ₗ* × *Wₗ* × *Cₗ*.
- ${A}_{i}^{\left(l\right)}$ are all the activations of *i*-th sample at the *l*-th layer.

**For a FFNN:** ${A}_{i}^{\left(l\right)} = \left|σ\left({W}^{\left(l\right)}{A}_{i}^{\left(l-1\right)}+{B}^{\left(l\right)}\right)\right| ,$ where *W*^{(*l*)} and *B*^{(*l*)} are the weights and biases for the *l*-th layer, *σ* is the non-linearity (ReLu, tanh, sigmoid..), | · | stands for element wise absolute value and ${A}_{i}^{\left(l-1\right)}$ is the output activation of previous layer for sample ${X}_{i} = {A}_{i}^{\left(0\right)} . {A}_{ij}^{\left(l\right)}$ denotes the activation of the j-th neuron for the i-th sample at the *l*-th layer, i.e. the j-th component on ${A}_{i}^{\left(l\right)}$. In the case of ReLU there is no need to take absolute values since the output is already non-negative. Note that in this definition the activation of a filter is non-negative to avoid having to separate between positive and negative correlated filters with respect to the input image. This information may be stored in a separate variable ${S}_{ij}^{\left(l\right)} = sign \left(σ{\left({W}^{\left(l\right)}{A}^{\left(l-1\right)}+{B}^{\left(l\right)}\right)}_{j}\right) ,$ which is the sign of the j-th neuron activation (before taking absolute values).

**For a CNN:**
Activation ${A}_{ij}^{\left(l\right)}$ of filter ${f}_{j}^{\left(l\right)}$ for the *i*-th image in the batch at layer *l* is defined as the spatial average of activations of ${F}_{ij}^{\left(l\right)}$ (after non-linearity and maxpooling if present) ${A}_{ij}^{\left(l\right)} = \frac{1}{{H}_{l} {W}_{l}} {\sum }_{r}^{{H}_{l}} {\sum }_{s}^{{W}_{l}} \left|{\left({F}_{ij}^{\left(l\right)}\right)}_{rs}\right|$ where (·)*ᵣₛ* stands for the (*r,s*) spatial coordinates (the definition of activation of a feature map is defined as the average of activations, but may be naturally extended to any metric. For example, someone may define the activation in terms of the *Lₚ* or *Lₚ,_{q}* norm of each feature map).
- Random Forest = Random forests, also known as random decision forests, are an ensemble learning method for classification, regression and other tasks that operate by constructing a multitude of decision trees at training time. For classification tasks, the output of the random forest is the class selected by most trees (https://scikit-learn.org/stable/modules/generated/sklearn.ensemble.RandomForestClassifier.html). A typical way to vary the decision tree generated at each generation is to select a random subset of the training data each time, for example using one or both of:
   ▪ Feature subsampling - For each tree, only train on some random subset of input features (in the present case, quantised filters)
   ▪ Bootstrap aggregating or 'bagging' - For each tree, some fraction of samples from the original dataset are randomly selected (with replacement) as a dataset for training that specific tree. In other words, each tree is trained with a random subset of rows from the data table. (https://en.wikipedia.org/wiki/Bootstrap_aggregating)

So an example process for building a forest of N decision trees using dataset (X, Y) would be:
Forest = {}

For each i in N:
- Bootstrap: Select P% of training samples as (X', Y')
- Feature subsample: From this select Q% of features/columns to get (X", Y")
- Train a decision tree Ti on (X", Y")
- Add Ti to the Forest

When building a decision tree, at each node a (user-defined) criterion is used to determine for which feature samples should be split. Choosing the feature with the lowest Gini index
(https://en.wikipedia.org/wiki/Decision tree learning#Gini impurity) or lowest entropy (i.e. highest Information Gain https://en.wikipedia.org/wiki/Decision tree learninq#lnformation gain) are two common choices for the criterion.

Each feature's index (entropy, Gini, etc.) is selected as the value for which that index evaluates as minimum, and the feature with the minimum index in this respect is selected as the feature used for splitting samples. The value for which this feature is split is taken as the node's **threshold.**
- Building greedily = for each node in a decision tree, when selecting a feature based on which to split data samples, the locally optimal (with respect to the criteria) choice is selected - https://en.wikipedia.org/wiki/Greedy_algorithm

## Claims

1. A computer-implemented method comprising:
recording node activations for each node in a layer of a trained artificial neural network - ANN - and predictions of the ANN, in respect of each item of training data used to train the ANN, wherein the ANN is a convolutional neural network - CNN - trained to classify objects in input images from an environment of an autonomous driving vehicle, the CNN being for use in the control of the autonomous driving vehicle;
taking as input the recorded node activations and as targets the recorded predictions of the ANN, creating multiple decision trees, where each decision tree is trained to approximate the ANN and optimize a defined criterion, for each node of each decision tree a threshold value for the defined criterion being calculated to determine for which node of the ANN the input activations should be split between branches of the decision tree;
recording the threshold values associated with respective nodes of the ANN;
obtaining threshold value combinations for each decision tree, each combination comprising one of the threshold values obtained for respective nodes of the ANN;
for each of the threshold value combinations of each decision tree, performing a selected rule extraction algorithm using the combination of threshold values to extract from the ANN at least one rule for explaining the output of the layer of the ANN, the selected rule extraction algorithm measuring the association of the input node activations with the target predictions;
for each of the threshold value combinations of each decision tree, obtaining a fidelity metric for the at least one rule using the combination of threshold values, the fidelity metric indicating the accuracy of the rule with respect to the predictions of the ANN;
determining which of the combinations of threshold values yields the best fidelity metric; and
using the selected rule extraction algorithm with the combination of threshold values determined to yield the best fidelity metric to extract at least one rule for explaining the output of the layer of the ANN.

2. A method as claimed in claim 1, wherein, for each decision tree, recording the threshold values includes ranking the threshold values, for each node of the ANN, according to occurrence frequency and average depth of appearance in the decision tree, and performing the selected rule extraction algorithm for each combination of threshold values includes performing the selected rule extraction algorithm first on that combination of threshold values which includes the threshold values occurring with the highest frequencies.

3. A method as claimed in claim 1 or 2, wherein obtaining threshold value combinations for each decision tree comprises one of: obtaining all possible combinations of the threshold values for each decision tree; obtaining combinations using only a preset number of the most frequently-appearing threshold values for each node of the ANN, for each decision tree; obtaining combinations using only a random subset of the threshold values for each node of the ANN, for each decision tree; obtaining combinations of only threshold values for each node of the ANN which meet a user-defined metric, for each decision tree.

4. A method as claimed in claim 1, 2 or 3, wherein the defined criterion to be optimized is entropy or Gini index.

5. A method as claimed in claim 1, 2, 3 or 4, wherein recording the threshold values associated with respective nodes of the ANN comprises, when there is no threshold value associated with a particular node of the ANN, recording as a threshold value for the node the per sample mean activation of the node.

6. A method as claimed in any preceding claim, wherein creating the multiple decision trees comprises using a random forest generation algorithm to build a plurality of diverse decision trees.

7. A computer program comprising instructions which, when executed by a computer, cause the computer to carry out the method of any of claims 1 to 6.

8. Apparatus comprising:
at least one computer processor (993), and
at least one memory (994) connected to the at least one computer processor (993) to store: node activations for each node in a layer of a trained artificial neural network - ANN, wherein the ANN is a convolutional neural network - CNN - trained to classify objects in input images from an environment of an autonomous driving vehicle, the CNN being for use in the control of the autonomous driving vehicle,
predictions of the ANN, in respect of each item of training data used to train the ANN, and
instructions to cause the processor (993) to:
taking as input the recorded node activations and as targets the recorded predictions of the ANN, create multiple decision trees, where each decision tree is trained to approximate the ANN and optimize a defined criterion, for each node of each decision tree a threshold value for the defined criterion being calculated to determine for which node of the ANN the input activations should be split between branches of the decision tree;
cause the threshold values associated with respective nodes of the ANN to be recorded;
obtain threshold value combinations for each decision tree, each combination comprising one of the threshold values obtained for respective nodes of the ANN;
for each of the threshold value combinations of each decision tree, perform a selected rule extraction algorithm using the combination of threshold values to extract from the ANN at least one rule for explaining the output of the layer of the ANN, the selected rule extraction algorithm measuring the association of the input node activations with the target predictions;
for each of the threshold value combinations of each decision tree, obtain a fidelity metric for the at least one rule using the combination of threshold values, the fidelity metric indicating the accuracy of the rule with respect to the predictions of the ANN;
determine which of the combinations of threshold values yields the best fidelity metric; and
use the selected rule extraction algorithm with the combination of threshold values determined to yield the best fidelity metric to extract at least one rule for explaining the output of the layer of the ANN.

9. Apparatus as claimed in claim 8, wherein, for each decision tree, causing the threshold values to be recorded includes ranking the threshold values, for each node of the ANN, according to occurrence frequency and average depth of appearance in the decision tree, and performing the selected rule extraction algorithm for each combination of threshold values includes performing the selected rule extraction algorithm first on that combination of threshold values which includes the threshold values occurring with the highest frequencies.

10. Apparatus as claimed in claim 8 or 9, wherein obtaining threshold value combinations for each decision tree comprises one of: obtaining all possible combinations of the threshold values for each decision tree; obtaining combinations using only a preset number of the most frequently-appearing threshold values for each node of the ANN, for each decision tree; obtaining combinations using only a random subset of the threshold values for each node of the ANN, for each decision tree; obtaining combinations of only threshold values for each node of the ANN which meet a user-defined metric, for each decision tree.

11. Apparatus as claimed in claim 8, 9 or 10, wherein the defined criterion to be optimized is entropy or Gini index.

12. Apparatus as claimed in claim 8, 9, 10 or 11, wherein causing the threshold values associated with respective nodes of the ANN to be recorded comprises, when there is no threshold value associated with a particular node of the ANN, recording as a threshold value for the node the per sample mean activation of the node.

13. Apparatus as claimed in any one of claims 8 to 12, wherein creating the multiple decision trees comprises using a random forest generation algorithm to build a plurality of diverse decision trees.

## Patentansprüche

1. Computerimplementiertes Verfahren, umfassend:
Aufzeichnen von Knotenaktivierungen für jeden Knoten in einer Schicht eines trainierten künstlichen neuronalen Netzwerks - ANN - und von Vorhersagen des ANN in Bezug auf jedes Element von Trainingsdaten, die verwendet werden, um das ANN zu trainieren, wobei das ANN ein neuronales Faltungsnetzwerk - CNN - ist, das trainiert ist, um Objekte in Eingabebildern aus einer Umgebung eines autonom fahrenden Fahrzeugs zu klassifizieren, wobei das CNN zur Verwendung bei der Steuerung des autonom fahrenden Fahrzeugs dient;
Heranziehen der aufgezeichneten Knotenaktivierungen als Eingabe und der aufgezeichneten Vorhersagen des ANN als Ziele, Erzeugen mehrerer Entscheidungsbäume, wobei jeder Entscheidungsbaum trainiert wird, um das ANN zu approximieren und ein definiertes Kriterium zu optimieren, wobei für jeden Knoten jedes Entscheidungsbaums ein Schwellenwert für das definierte Kriterium berechnet wird, um zu bestimmen, für welchen Knoten des ANN die Eingabeaktivierungen zwischen Zweigen des Entscheidungsbaums aufgeteilt werden sollen;
Aufzeichnen der Schwellenwerte, die jeweiligen Knoten des ANN zugeordnet sind;
Erhalten von Schwellenwertkombinationen für jeden Entscheidungsbaum, wobei jede Kombination einen der Schwellenwerte umfasst, die für jeweilige Knoten des ANN erhalten wurden;
Durchführen, für jede der Schwellenwertkombinationen jedes Entscheidungsbaums, eines ausgewählten Regelextraktionsalgorithmus unter Verwendung der Kombination von Schwellenwerten, um aus dem ANN mindestens eine Regel zur Erklärung der Ausgabe der Schicht des ANN zu extrahieren, wobei der ausgewählte Regelextraktionsalgorithmus die Assoziation der Eingabeknotenaktivierungen mit den Zielvorhersagen misst;
Erhalten, für jede der Schwellenwertkombinationen jedes Entscheidungsbaums, einer Genauigkeitsmetrik für die mindestens eine Regel unter Verwendung der Kombination von Schwellenwerten, wobei die Genauigkeitsmetrik die Richtigkeit der Regel in Bezug auf die Vorhersagen des ANN angibt;
Bestimmen, welche der Kombinationen von Schwellenwerten die beste Genauigkeitsmetrik liefert; und
Verwenden des ausgewählten Regelextraktionsalgorithmus mit der Kombination von Schwellenwerten, die bestimmt wurde, um die beste Genauigkeitsmetrik zu liefern, um mindestens eine Regel zur Erklärung der Ausgabe der Schicht des ANN zu extrahieren.

2. Verfahren nach Anspruch 1, wobei für jeden Entscheidungsbaum das Aufzeichnen der Schwellenwerte das Einstufen der Schwellenwerte für jeden Knoten des ANN gemäß der Auftrittshäufigkeit und der durchschnittlichen Erscheinungstiefe in dem Entscheidungsbaum beinhaltet und das Durchführen des ausgewählten Regelextraktionsalgorithmus für jede Kombination von Schwellenwerten das Durchführen des ausgewählten Regelextraktionsalgorithmus zuerst auf derjenigen Kombination von Schwellenwerten beinhaltet, die die Schwellenwerte beinhaltet, die mit den höchsten Häufigkeiten auftreten.

3. Verfahren nach Anspruch 1 oder 2, wobei das Erhalten von Schwellenwertkombinationen für jeden Entscheidungsbaum eines der Folgenden umfasst: Erhalten aller möglichen Kombinationen der Schwellenwerte für jeden Entscheidungsbaum; Erhalten von Kombinationen unter Verwendung nur einer voreingestellten Anzahl der am häufigsten erscheinenden Schwellenwerte für jeden Knoten des ANN für jeden Entscheidungsbaum; Erhalten von Kombinationen unter Verwendung nur einer zufälligen Teilmenge der Schwellenwerte für jeden Knoten des ANN für jeden Entscheidungsbaum; Erhalten von Kombinationen von nur Schwellenwerten für jeden Knoten des ANN, die eine benutzerdefinierte Metrik erfüllen, für jeden Entscheidungsbaum.

4. Verfahren nach Anspruch 1, 2 oder 3, wobei das definierte Kriterium, das optimiert werden soll, die Entropie oder der Gini-Index ist.

5. Verfahren nach Anspruch 1, 2, 3 oder 4, wobei das Aufzeichnen der Schwellenwerte, die jeweiligen Knoten des ANN zugeordnet sind, umfasst, wenn einem bestimmten Knoten des ANN kein Schwellenwert zugeordnet ist, Aufzeichnen der mittleren Aktivierung pro Abtastwert des Knotens als einen Schwellenwert für den Knoten.

6. Verfahren nach einem vorhergehenden Anspruch, wobei das Erzeugen der mehreren Entscheidungsbäume die Verwendung eines Random-Forest-Generierungsalgorithmus umfasst, um eine Vielzahl von diversen Entscheidungsbäumen aufzubauen.

7. Computerprogramm, umfassend Anweisungen, die, wenn sie von einem Computer ausgeführt werden, den Computer veranlassen, das Verfahren nach einem der Ansprüche 1 bis 6 auszuführen.

8. Einrichtung, umfassend:
mindestens einen Computerprozessor (993) und
mindestens einen Speicher (994), der mit dem mindestens einen Computerprozessor (993) verbunden ist, um zu speichern: Knotenaktivierungen für jeden Knoten in einer Schicht eines trainierten künstlichen neuronalen Netzwerks - ANN, wobei das ANN ein neuronales Faltungsnetzwerk - CNN - ist, das trainiert ist, um Objekte in Eingabebildern aus einer Umgebung eines autonom fahrenden Fahrzeugs zu klassifizieren, wobei das CNN zur Verwendung bei der Steuerung des autonom fahrenden Fahrzeugs dient,
Vorhersagen des ANN in Bezug auf jedes Element von Trainingsdaten, die verwendet werden, um das ANN zu trainieren, und
Anweisungen, um den Prozessor (993) zu Folgendem zu veranlassen: Heranziehen der aufgezeichneten Knotenaktivierungen als Eingabe und der aufgezeichneten Vorhersagen des ANN als Ziele, Erzeugen mehrerer Entscheidungsbäume, wobei jeder Entscheidungsbaum trainiert wird, um das ANN zu approximieren und ein definiertes Kriterium zu optimieren, wobei für jeden Knoten jedes Entscheidungsbaums ein Schwellenwert für das definierte Kriterium berechnet wird, um zu bestimmen, für welchen Knoten des ANN die Eingabeaktivierungen zwischen Zweigen des Entscheidungsbaums aufgeteilt werden sollen;
Veranlassen, dass die Schwellenwerte, die jeweiligen Knoten des ANN zugeordnet sind, aufgezeichnet werden;
Erhalten von Schwellenwertkombinationen für jeden Entscheidungsbaum, wobei jede Kombination einen der Schwellenwerte umfasst, die für jeweilige Knoten des ANN erhalten wurden;
Durchführen, für jede der Schwellenwertkombinationen jedes Entscheidungsbaums, eines ausgewählten Regelextraktionsalgorithmus unter Verwendung der Kombination von Schwellenwerten, um aus dem ANN mindestens eine Regel zur Erklärung der Ausgabe der Schicht des ANN zu extrahieren, wobei der ausgewählte Regelextraktionsalgorithmus die Assoziation der Eingabeknotenaktivierungen mit den Zielvorhersagen misst;
Erhalten, für jede der Schwellenwertkombinationen jedes Entscheidungsbaums, einer Genauigkeitsmetrik für die mindestens eine Regel unter Verwendung der Kombination von Schwellenwerten, wobei die Genauigkeitsmetrik die Richtigkeit der Regel in Bezug auf die Vorhersagen des ANN angibt;
Bestimmen, welche der Kombinationen von Schwellenwerten die beste Genauigkeitsmetrik liefert; und
Verwenden des ausgewählten Regelextraktionsalgorithmus mit der Kombination von Schwellenwerten, die bestimmt wurde, um die beste Genauigkeitsmetrik zu liefern, um mindestens eine Regel zur Erklärung der Ausgabe der Schicht des ANN zu extrahieren.

9. Einrichtung nach Anspruch 8, wobei für jeden Entscheidungsbaum das Veranlassen, dass die Schwellenwerte aufgezeichnet werden, das Einstufen der Schwellenwerte für jeden Knoten des ANN gemäß der Auftrittshäufigkeit und der durchschnittlichen Erscheinungstiefe in dem Entscheidungsbaum beinhaltet und das Durchführen des ausgewählten Regelextraktionsalgorithmus für jede Kombination von Schwellenwerten das Durchführen des ausgewählten Regelextraktionsalgorithmus zuerst auf derjenigen Kombination von Schwellenwerten beinhaltet, die die Schwellenwerte beinhaltet, die mit den höchsten Häufigkeiten auftreten.

10. Einrichtung nach Anspruch 8 oder 9, wobei das Erhalten von Schwellenwertkombinationen für jeden Entscheidungsbaum eines der Folgenden umfasst: Erhalten aller möglichen Kombinationen der Schwellenwerte für jeden Entscheidungsbaum; Erhalten von Kombinationen unter Verwendung nur einer voreingestellten Anzahl der am häufigsten erscheinenden Schwellenwerte für jeden Knoten des ANN für jeden Entscheidungsbaum; Erhalten von Kombinationen unter Verwendung nur einer zufälligen Teilmenge der Schwellenwerte für jeden Knoten des ANN für jeden Entscheidungsbaum; Erhalten von Kombinationen von nur Schwellenwerten für jeden Knoten des ANN, die eine benutzerdefinierte Metrik erfüllen, für jeden Entscheidungsbaum.

11. Einrichtung nach Anspruch 8, 9 oder 10, wobei das definierte Kriterium, das optimiert werden soll, die Entropie oder der Gini-Index ist.

12. Einrichtung nach Anspruch 8, 9, 10 oder 11, wobei das Veranlassen, dass die Schwellenwerte, die jeweiligen Knoten des ANN zugeordnet sind, aufgezeichnet werden, umfasst, wenn einem bestimmten Knoten des ANN kein Schwellenwert zugeordnet ist, Aufzeichnen der mittleren Aktivierung pro Abtastwert des Knotens als einen Schwellenwert für den Knoten.

13. Einrichtung nach einem der Ansprüche 8 bis 12, wobei das Erzeugen der mehreren Entscheidungsbäume die Verwendung eines Random-Forest-Generierungsalgorithmus umfasst, um eine Vielzahl von diversen Entscheidungsbäumen aufzubauen.

## Revendications

1. Procédé mis en œuvre par ordinateur comprenant :
l'enregistrement d'activations de nœuds pour chaque nœud dans une couche d'un réseau de neurones artificiels, ANN, entraîné et de prédictions de l'ANN, par rapport à chaque élément de données d'entraînement utilisé pour entraîner l'ANN, dans lequel l'ANN est un réseau neuronal convolutif, CNN, entraîné à classifier des objets dans des images d'entrée provenant d'un environnement d'un véhicule à conduite autonome, le CNN étant destiné à être utilisé dans la commande du véhicule à conduite autonome ;
en prenant comme entrée les activations de nœuds enregistrées et comme cibles les prédictions enregistrées de l'ANN, la création de multiples arbres de décision, où chaque arbre de décision est entraîné à approximer l'ANN et à optimiser un critère défini, une valeur seuil pour le critère défini étant calculée pour chaque nœud de chaque arbre de décision afin de déterminer pour quel nœud de l'ANN les activations d'entrée doivent être réparties entre les branches de l'arbre de décision ;
l'enregistrement des valeurs seuils associées à des nœuds respectifs de l'ANN ;
l'obtention de combinaisons de valeurs seuils pour chaque arbre de décision, chaque combinaison comprenant l'une des valeurs seuils obtenues pour des nœuds respectifs de l'ANN ;
pour chacune des combinaisons de valeurs seuils de chaque arbre de décision, l'exécution d'un algorithme d'extraction de règles sélectionné à l'aide de la combinaison de valeurs seuils pour extraire de l'ANN au moins une règle pour expliquer la sortie de la couche de l'ANN, l'algorithme d'extraction de règles sélectionné mesurant l'association des activations de nœuds d'entrée avec les prédictions cibles ;
pour chacune des combinaisons de valeurs seuils de chaque arbre de décision, l'obtention d'une mesure de fidélité pour l'au moins une règle à l'aide de la combinaison de valeurs seuils, la mesure de fidélité indiquant la précision de la règle par rapport aux prédictions de l'ANN ;
la détermination de laquelle des combinaisons de valeurs seuils donne la meilleure mesure de fidélité ; et
l'utilisation de l'algorithme d'extraction de règles sélectionné avec la combinaison de valeurs seuils déterminée comme donnant la meilleure mesure de fidélité pour extraire au moins une règle pour expliquer la sortie de la couche de l'ANN.

2. Procédé selon la revendication 1, dans lequel, pour chaque arbre de décision, l'enregistrement des valeurs seuils comporte le classement des valeurs seuils, pour chaque nœud de l'ANN, en fonction de la fréquence d'occurrence et de la profondeur moyenne d'apparition dans l'arbre de décision, et l'exécution de l'algorithme d'extraction de règles sélectionné pour chaque combinaison de valeurs seuils comporte l'exécution de l'algorithme d'extraction de règles sélectionné en premier sur la combinaison de valeurs seuils qui comporte les valeurs seuils apparaissant avec les fréquences les plus élevées.

3. Procédé selon la revendication 1 ou 2, dans lequel l'obtention de combinaisons de valeurs seuils pour chaque arbre de décision comprend l'une des opérations suivantes : l'obtention de toutes les combinaisons possibles des valeurs seuils pour chaque arbre de décision ; l'obtention de combinaisons utilisant uniquement un nombre prédéfini des valeurs seuils apparaissant le plus fréquemment pour chaque nœud de l'ANN, pour chaque arbre de décision ; l'obtention de combinaisons utilisant uniquement un sous-ensemble aléatoire des valeurs seuils pour chaque nœud de l'ANN, pour chaque arbre de décision ; l'obtention de combinaisons uniquement de valeurs seuils pour chaque nœud de l'ANN qui satisfont à une mesure définie par l'utilisateur, pour chaque arbre de décision.

4. Procédé selon la revendication 1, 2 ou 3, dans lequel le critère défini à optimiser est l'entropie ou l'indice de Gini.

5. Procédé selon la revendication 1, 2, 3 ou 4, dans lequel l'enregistrement des valeurs seuils associées à des nœuds respectifs de l'ANN comprend, lorsqu'il n'y a pas de valeur seuil associée à un nœud particulier de l'ANN, l'enregistrement, comme valeur seuil pour le nœud, de l'activation moyenne du nœud par échantillon.

6. Procédé selon une quelconque revendication précédente, dans lequel la création des multiples arbres de décision comprend l'utilisation d'un algorithme de génération de forêt aléatoire pour construire une pluralité d'arbres de décision divers.

7. Programme informatique comprenant des instructions qui, lorsqu'elles sont exécutées par un ordinateur, amènent l'ordinateur à mettre en œuvre le procédé selon l'une quelconque des revendications 1 à 6.

8. Appareil comprenant :
au moins un processeur informatique (993), et
au moins une mémoire (994) connectée à l'au moins un processeur informatique (993) pour stocker : des activations de nœuds pour chaque nœud dans une couche d'un réseau de neurones artificiels, ANN, entraîné, dans lequel l'ANN est un réseau neuronal convolutif, CNN, entraîné à classifier des objets dans des images d'entrée provenant d'un environnement d'un véhicule à conduite autonome, le CNN étant destiné à être utilisé dans la commande du véhicule à conduite autonome ,
des prédictions de l'ANN, par rapport à chaque élément de données d'entraînement utilisé pour entraîner l'ANN, et
des instructions pour amener le processeur (993) à :
en prenant comme entrée les activations de nœuds enregistrées et comme cibles les prédictions enregistrées de l'ANN, créer de multiples arbres de décision, où chaque arbre de décision est entraîné à approximer l'ANN et à optimiser un critère défini, une valeur seuil pour le critère défini étant calculée pour chaque nœud de chaque arbre de décision afin de déterminer pour quel nœud de l'ANN les activations d'entrée doivent être réparties entre les branches de l'arbre de décision ;
entraîner l'enregistrement des valeurs seuils associées à des nœuds respectifs de l'ANN ;
obtenir des combinaisons de valeurs seuils pour chaque arbre de décision, chaque combinaison comprenant l'une des valeurs seuils obtenues pour des nœuds respectifs de l'ANN ;
pour chacune des combinaisons de valeurs seuils de chaque arbre de décision, exécuter un algorithme d'extraction de règles sélectionné à l'aide de la combinaison de valeurs seuils pour extraire de l'ANN au moins une règle pour expliquer la sortie de la couche de l'ANN, l'algorithme d'extraction de règles sélectionné mesurant l'association des activations de nœuds d'entrée avec les prédictions cibles ;
pour chacune des combinaisons de valeurs seuils de chaque arbre de décision, obtenir une mesure de fidélité pour l'au moins une règle à l'aide de la combinaison de valeurs seuils, la mesure de fidélité indiquant la précision de la règle par rapport aux prédictions de l'ANN ;
déterminer laquelle des combinaisons de valeurs seuils donne la meilleure mesure de fidélité ; et
utiliser l'algorithme d'extraction de règles sélectionné avec la combinaison de valeurs seuils déterminée comme donnant la meilleure mesure de fidélité pour extraire au moins une règle pour expliquer la sortie de la couche de l'ANN.

9. Appareil selon la revendication 8, dans lequel, pour chaque arbre de décision, l'entraînement de l'enregistrement des valeurs seuils comporte le classement des valeurs seuils, pour chaque nœud de l'ANN, en fonction de la fréquence d'occurrence et de la profondeur moyenne d'apparition dans l'arbre de décision, et l'exécution de l'algorithme d'extraction de règles sélectionné pour chaque combinaison de valeurs seuils comporte l'exécution de l'algorithme d'extraction de règles sélectionné en premier sur la combinaison de valeurs seuils qui comporte les valeurs seuils apparaissant avec les fréquences les plus élevées.

10. Appareil selon la revendication 8 ou 9, dans lequel l'obtention de combinaisons de valeurs seuils pour chaque arbre de décision comprend l'une des opérations suivantes : l'obtention de toutes les combinaisons possibles des valeurs seuils pour chaque arbre de décision ; l'obtention de combinaisons utilisant uniquement un nombre prédéfini des valeurs seuils apparaissant le plus fréquemment pour chaque nœud de l'ANN, pour chaque arbre de décision ; l'obtention de combinaisons utilisant uniquement un sous-ensemble aléatoire des valeurs seuils pour chaque nœud de l'ANN, pour chaque arbre de décision ; l'obtention de combinaisons uniquement de valeurs seuils pour chaque nœud de l'ANN qui satisfont à une mesure définie par l'utilisateur, pour chaque arbre de décision.

11. Appareil selon la revendication 8, 9 ou 10, dans lequel le critère défini à optimiser est l'entropie ou l'indice de Gini.

12. Appareil selon la revendication 8, 9, 10 ou 11, dans lequel l'entraînement de l'enregistrement des valeurs seuils associées à des nœuds respectifs de l'ANN comprend, lorsqu'il n'y a pas de valeur seuil associée à un nœud particulier de l'ANN, l'enregistrement, comme valeur seuil pour le nœud, de l'activation moyenne du nœud par échantillon.

13. Appareil selon l'une quelconque des revendications 8 à 12, dans lequel la création des multiples arbres de décision comprend l'utilisation d'un algorithme de génération de forêt aléatoire pour construire une pluralité d'arbres de décision divers.
